# EUROPÄISCHE PATENTSCHRIFT

(11) **EP 2 066 527 B1**
(45) Veröffentlichungstag und Bekanntmachung des Hinweises auf die Patenterteilung: **22.02.2012**
(21) Anmeldenummer: 07802264.7
(22) Anmeldetag: 11.09.2007
(51) Int. Cl.: B60N 2/20, B60N 2/36, B60N 2/46

(54) **FAHRZEUGSITZ MIT DREHBARER UND IM WESENTLICHEN VERLAGERBAREN RÜCKENLEHNE**
VEHICLE SEAT WITH A ROTATABLE AND ESSENTIALLY DISPLACEABLE BACKREST
SIEGE DE VEHICULE A DOSSIER ROTATIF ET ESSENTIELLEMENT DECALABLE

(30) Priorität: 11.09.2006 DE 102006043205
(43) Veröffentlichungstag der Anmeldung: 10.06.2009
(73) Patentinhaber: Johnson Controls GmbH, 51399 Burscheid (DE)
(72) Erfinder: MILDT, Helmut, 51789 Lindlar/Schmitzhöhe-Holl (DE); ABRAHAM, James, 51147 Köln (DE)
(74) Vertreter: Schwöbel, Thilo K.
(86) Internationale Anmeldenummer: PCT/EP2007/007910
(87) Internationale Veröffentlichungsnummer: WO 2008/031564

(56) Entgegenhaltungen:
- EP-A- 0 756 961
- WO-A-97/28019
- DE-A1- 10 345 650
- DE-A1-102004 013 271
- US-A- 3 540 777

## Beschreibung

Die vorliegende Erfindung betrifft ein Fahrzeugsitz mit einem Sitzteil und einer Rückenlehne, wobei die Rückenlehne eine erste Drehachse aufweist, wobei die Rückenlehne durch die erste Drehachse um wenigstens 90° um die erste Drehachse von einer Normalposition in eine Ladeposition drehbar vorgesehen ist.

Ähnliche Vorrichtungen sind allgemein bekannt. So beschreibt beispielsweise die Druckschrift US 3 666 319 A eine Armlehne, die zwischen einer eingeklappten und einer ausgeklappten Position verstellbar ist. Dabei wird die Bewegung der Armlehne durch ein Bauteil kontrolliert. Nachteilig bei der Vorrichtung ist jedoch, dass die Armlehne lediglich Teil einer Rückenlehne ist und nicht selber bei Bedarf die Funktion eines umklappbaren Fahrzeugsitzes übernehmen kann.

Aus der Druckschrift WO 97/28019, die als nächstliegender Stand der Technik angesehen wird, geht ein Fahrzeugsitz mit einer Armlehne hervor, welche zwei Sitzpolster aufweist, die an einer Rückwand angeordnet sind. Dieser Fahrzeugsitz mit Armlehne weist eine erste Drehachse zur Verstellung von der Sitzposition in die Armlehnenposition auf.

Der vorliegenden Erfindung liegt die Aufgabe zugrunde, einen Fahrzeugsitz zu schaffen, der auch als Armlehne nutzbar ist und der die Mängel der aus dem Stand der Technik bekannten Vorrichtungen nicht aufweist und zudem leicht zu bedienen, robust und kostengünstig in der Herstellung ist.

Der vorliegenden Erfindung liegt die Aufgabe zugrunde, einen Fahrzeugsitz zu schaffen, der auch als Armlehne nutzbar ist und der die Mängel der aus dem Stand der Technik bekannten Vorrichtungen nicht aufweist und zudem leicht zu bedienen, robust und kostengünstig in der Herstellung ist.

Die Aufgabe wird durch ein Fahrzeugsitz mit einem Sitzteil und einer Rückenlehne nach Anspruch 1 gelöst. Es ist hierdurch erfindungsgemäß vorteilhaft möglich, den Fahrzeugsitz sowohl in der Funktion als Fahrzeugsitz zu benutzen und Personen (Insassen) darauf sitzen zu lassen, wie auch Teile des Fahrzeugsitzes als Armlehne zu verwenden, um einem Insassen einen besonderen Komfort durch eine Armlehne zu bieten. Zudem kann die Rückenlehne des Fahrzeugsitzes in eine Ladeposition gedreht werden, wodurch Stauraum im Fahrzeuginneren geschaffen wird. Erfindungsgemäß ist es demnach möglich, dass der Fahrzeugsitz mehrere Funktionen ausübt und sich den Wünschen der Fahrzeuginsassen oder des Fahrzeugführers gezielt anpasst, ohne dabei aufwendig umgebaut werden zu müssen. Der überwiegende Teil der Rückenlehne, der in der Armlehnenposition höher gelagert ist als in der Normalposition, ist insbesondere der untere Teil, bevorzugt die untere Hälfte, der Rückenlehne.

Erfindungsgemäß wird zur Überführung der Rückenlehne des Fahrzeugsitzes in die Armlehnenposition die Rückenlehne um eine zweite Drehachse gedreht. Die zweite Drehachse befindet sich bevorzugt in Richtung des Sitzteils vor der ersten Drehachse und in Bezug auf das Sitzteil über der ersten Drehachse. Es ist durch die Drehung der Rückenlehne um die zweiten Drehachse vorteilhaft möglich einen überwiegenden Teil der Rückenlehne in der Armlehnenposition höher zu lagern, als in der Ladeposition. Hierdurch wird die Nutzung der Rückenlehne als Armlehne wesentlich bequemer und der Komfort für die Insassen wird erhöht. Zudem wird die Rückenlehne durch die Drehung um die zweite Drehachse im wesentlichen vorverlagert, so dass der Endbereich der Rückenlehne (unteren Bereich in der Normalposition) bei einer Drehung nicht an Rahmenteile des Fahrzeugs, insbesondere nicht an die Karosserie des Fahrzeugs, stoßen kann.

Im Sinne der Erfindung soll unter dem Endbereich einer Rückenlehne der Teil verstanden werden, der einer Kopfstütze gegenüber liegt bzw. liegen würde und der sich im wesentlichen in Kontakt mit dem Sitzteil befindet. Unter Rahmenteil sollen alle Bauteile eines Fahrzeugs (insbesondere Karosserieteile) verstanden werden, an welchen mögliche Fahrzeuginnenraumbauteile befestigt werden können. Solche

Fahrzeuginnenraumbauteile können beispielsweise die Fahrzeugsitze einer Rücksitzbank darstellen.

Unter der Normalposition eines Fahrzeugsitzes soll verstanden werden, wenn die Rückenlehne und das Sitzteil im wesentlich in einem rechten Winkel zueinander angeordnet sind, wobei sich das Sitzteil in einer im wesentlichen waagerechten Ebene befindet und wobei sich die Rückenlehne im wesentlichen in einer aufrechten Position befindet. Bei der Ladeposition hingegen soll sich die Rückenlehne im wesentlichen in Kontakt mit dem Sitzteil in der waagerechten Ebene befinden. Unter einer Armlehnenposition im Sinne der Erfindung soll hingegen verstanden werden, wenn die Rückenlehne annähernd waagerecht aber nicht mit dem überwiegenden Teil der Rückenlehne in Kontakt zu dem Sitzteil steht. Bevorzugt steht nur die am oberen Ende montierte Kopfstütze der Rückenlehne in Kontakt mit dem Sitzteil. Denkbar wäre auch eine Armlehnenposition in der die Rückenlehne im wesentlichen waagerecht zum Sitzteil gelagert ist, jedoch einen definierten Abstand zum Sitzteil aufweist und kein Kontakt zum Sitzteil besteht.

Erfindungsgemäß ist die zweite Drehachse eine von dem Schwenkmittel bestimmte virtuelle Drehachse. Durch die virtuelle zweite Drehachse ist es besonders vorteilhaft möglich, die Vorteile (Positionierung der Rückenlehne relativ zum Sitzteil) der zweite Drehachse zu nutzen, ohne dabei die Nachteile einer in der Lage der zweiten Drehachse befindlichen reellen Drehachse in Kauf nehmen zu müssen. Insbesondere der Sitzkomfort für Insassen erhöht sich durch die virtuelle zweite Drehachse, da sich keine harten Bauteile der zweiten Drehachse durch das Rückenlehnenpolster drücken können. Ein größerer meat to metal - Abstand bei der ersten Drehachse und die Möglichkeit einer platzsparenderen Anordnung der Rückenlehne gegenüber der Karosserie sind daher Vorteile die durch die zweite Drehachse entstehen.

Bevorzugt weist der Fahrzeugsitz eine weitere Rückenlehne auf. Dabei kann die weitere Rückenlehne ebenfalls von einer Normalposition in eine Ladeposition gedreht werden. Die weitere Rückenlehne bildet, bevorzugt mit einem weiteren Sitzteil, beispielsweise ein 40% - Teil einer Fahrzeugrückbank. Die Rückenlehne und das Sitzteil bilden bevorzugt ein 20% - Teil einer Fahrzeugrückbank. Das Sitzteil und das weitere Sitzteil können in einer Ausführungsform ein zusammenhängendes Sitzteil bilden, so dass nur ein Sitzteil für das 20%-Teil und das 40% -Teil zusammen vorliegt. Bei getrennten Sitzteilen (20% - Teil und 40% - Teil besitzen jeweils ein Sitzteil) ist es erfindungsgemäß bevorzugt möglich, sowohl das 20 %-Teil wie auch das 40 %- Teil einzeln auszubauen, um so situationsabhängig sehr flexibel Stauraum im Fahrzeuginnenraum zu schaffen.

Vorzugsweise bilden die Rückenlehne und die weitere Rückenlehne in der Ladeposition eine gemeinsame, bevorzugt im wesentlichen waagerechte, Ebene. Vorteilhafterweise entsteht hierdurch Stauraum im Fahrzeug, wodurch auch ein Transport von größeren Gegenständen möglich ist. Bevorzugt bilden dabei die Rückenlehne und die weitere Rückenlehne eine waagerechte Ebene, um die Beladung des Fahrzeuges zu erleichtern, da keine Neigungen der Ladefläche überwunden oder beim Laden berücksichtigt werden müssen. Zudem können bei einer waagerechten Ladefläche auch größere Gegenstände transportiert werden, ohne dass Teilbereiche des größeren Gegenstandes an den Fahrzeughimmel stoßen.

In einer nicht beanspruchten Ausführungsform kann das Schwenkmittel ein Viergelenkmechanismus sein. Durch diesen Viergelenkmechanismus ist die Rückenlehne um die zweite virtuelle Drehachse drehbar, wodurch die Rückenlehne im wesentlichen vorverlagert und der überwiegende Teil der Rückenlehne höher gelagert wird als in der Ladeposition. Es ist vorteilhaft, als Schwenkmittel einen Viergelenkmechanismus zu verwenden, da hierdurch eine stabile Konstruktion der Rückenlehne in Armlehnenposition gewährleistet ist. Der Fachmann versteht, dass beispielsweise durch das Aufstützen eines Ellenbogens auf die Rückenlehne in Armlehnenposition eine Kraft auf die Rückenlehne wirkt. In Abhängigkeit der Position, an der die Kraft auf die Rückenlehne in Armlehnenposition wirkt, entsteht ein Hebeleffekt und demzufolge eine vom Hebeleffekt abhängige (starke) Belastung der Rückenlehne in der Armlehnenposition. Demzufolge muss die Rückenlehne so in der Armlehnenposition haltbar vorgesehen sein, dass auch bei großen Krafteinwirkungen keine Beschädigungen an Bauteilen der Rückenlehne, insbesondere des Schwenkmittels, entstehen können.

Erfindungsgemäß weist das Schwenkmittel ein Zahnrad und eine Lasche auf. Das Zahnrad ist bevorzugt drehfest an der Rückenlehne befestigt und kämmt mit einer Verzahnung die Lasche. Die Lasche ist weiterhin um die erste Drehachse drehbar. Das Zahnrad befindet sich in der Normalposition in einer hinteren Anschlagposition der Lasche. Wird die Rückenlehne von der Normalposition in die Armlehnenposition gedreht, so wandert das Zahnrad auf der Verzahnung in Richtung des Sitzteils nach vorne, wobei die Lasche ihre Position relativ zum Sitzteil nicht verändert. Hierdurch ist der überwiegende Teil der Rückenlehne in Richtung des Sitzteils nach vorn verlagert. Soll die Rückenlehne in die Ladeposition gedreht werden, so wird sowohl die Rückenlehne wie auch die weitere Rückenlehne um die erste Drehasche gedreht. Dabei schwenkt die Lasche um die erste Drehachse in Richtung des Sitzteils nach vorne, wodurch das Zahnrad wieder zu der hinteren Anschlagposition der Lasche wandert (Übergang Armlehnenposition - Ladeposition), bzw. an der hinteren Anschlagposition verbleibt

(Übergang Normalposition - Ladeposition). Hierdurch ist es vorteilhaft möglich, dass die Rückenlehne, ohne dass ein überwiegender Teil der Rückenlehne höher gelagert ist, in eine Ladeposition gedreht werden kann. Vorteilhaft ist hierbei die Bildung einer waagerechten Ebene zwischen der Rückenlehne und der weiteren Rückenlehne in Ladeposition möglich.

Bevorzugt ist das Schwenkmittel mit dem Sitzteil und der Rückenlehne des Fahrzeugsitzes verbunden. Hierdurch ist das Schwenkmittel einsetzbar und fest im Fahrzeug montiert. Zur Befestigung kann jedes Befestigungsmittel verwendet werden, das die Bewegung (beispielsweise Drehen um die erste Drehachse). die Teile des Schwenkmittels zur Positionsänderung des Fahrzeugsitzes durchlaufen, zulässt.

Besonders Bevorzugt ist das Schwenkmittel durch ein Rastmittel gesperrt. Unter Rastmittel im Sinne der Erfindung soll jedes Mittel verstanden werden, welches dazu geeignet ist eine ungewollte Drehung der Rückenlehne in Armlehnenposition oder Normalposition zu verhindern. Der Fachmann versteht, dass jedes beliebige Rastmittel bzw. jeder beliebige Rastbelag verwendbar ist. Beispielsweise könnte eine Klinke mit einer Klingenverrastung als Rastmittel verwendet werden. Zur gewollten Drehung der Rückenlehne muss zur Lösung des Rastmittels zunächst ein Hebel gelöst oder verschwenkt werden, so dass das Rastmittel gelöst ist. Durch das Rastmittel ist es vorteilhaft möglich ein ungewolltes Drehen der Rückenlehne, wie es beispielsweise bei einer starken Bremsung des Fahrzeuges vorkommen kann, zu verhindern, Insbesondere Insassen auf der Rücksitzbank können herbei nicht durch eine sich plötzlich drehende Rückenlehne verletzt oder erschreckt werden. Auch im Sinne der Erfindung ist ein weiteres Rastmittel, welches die Rückenlehne in der Armlehnenposition hält. Somit kann verhindert werden, dass bei einer Nichtbenutzung der Rückenlehne in Armlehnenposition diese zurück in die Normalposition schwenkt.

Vorteilhaft besteht zwischen der ersten Drehachse und einer Anlehnfläche der Rückenlehne ein Mindestabstand. Durch den Mindestabstand kommen Insassen, die auf dem Fahrzeugsitz Platz nehmen, nicht in Kontakt mit der (reellen) ersten Drehachse. Unbequemes Sitzen oder Schmerzen durch längeres Sitzen in Kontakt mit harten Bauteilen der ersten Drehachse werden somit verhindert und der Sitzkomfort gesteigert. Vorzugsweise beträgt der Mindestabstand zwischen Anlehnfläche und ersten Drehachse mindestens 20 mm, bevorzugt mindestens 30 mm, besonders bevorzugt 40 mm. Nachteile einer so gelagerten erste Drehachse (Endbereich der Rückenlehne gelangt in Richtung des Sitzteils nach hinten und kann an Rahmenteile stoßen) werden erfindungsgemäß durch die virtuelle zweite Drehachse, die das Schwenkmittel bildet, behoben.

Besonders bevorzugt ist der Fahrzeugsitz mit Rückenlehne und weiterer Rückenlehne ein Teil, bevorzugt ein 60% - Teil, einer Rückbank eines Fahrzeugs. Es ist dabei vorteilhaft möglich, durch Drehen der Rückenlehne und der weiteren Rückenlehen in Ladeposition die Rücksitzbank so zu verändern, dass neben dem Kofferraum weiterer Stauraum im Fahrzeug entsteht. Erfindungsgemäß denkbar ist jedoch auch, dass der Fahrzeugsitz ein Beifahrersitz eines Fahrzeuges ist und durch besondere Gestaltung der Rückseite der Rückenlehne diese in Armlehnenposition dem Fahrzeugführer nutzt. Beispielsweise kann die Rückseite des Fahrzeugsitzes Vertiefungen aufweisen, in die der Fahrzeugführer Gegenstande legen kann. Dabei sind insbesondere solche Gegenstände bevorzugt, die in Sicht- oder Reichweite des Fahrzeugführers transportiert werden sollen.

Die Erfindung wird im Folgenden anhand von in der Zeichnung dargestellten Ausführungsbeispielen näher erläutert. Dabei wird der allgemeine Erfindungsgedanken jedoch nicht eingeschränkt.
**Figur 1** zeigt schematisch einen Fahrzeugsitz in einer Normalposition und mit einer erste Ausführungsform eines Schwenkmittels
**Figur 2** und **Figur 4** stellen schematisch den Fahrzeugsitz mit der ersten Ausführungsform des Schwenkmittels dar, wobei die Rückenlehne in eine Armlehnenposition gedreht ist.
**Figur 3** zeigt schematisch den Fahrzeugsitz mit der ersten Ausführungsform des Schwenkmittels , wobei die Rückenlehne in eine Ladeposition gedreht ist.
**Figur 5** zeigt schematisch den Fahrzeugsitz, die Rückenlehne ist in die Armlehnenposition gedreht und das Schwenkmittel ist in diesem Beispiel ein nicht beanspruchten Viergelenkmechanismus.
**Figur 6** stellt schematisch den Viergelenkmechanismus dar.

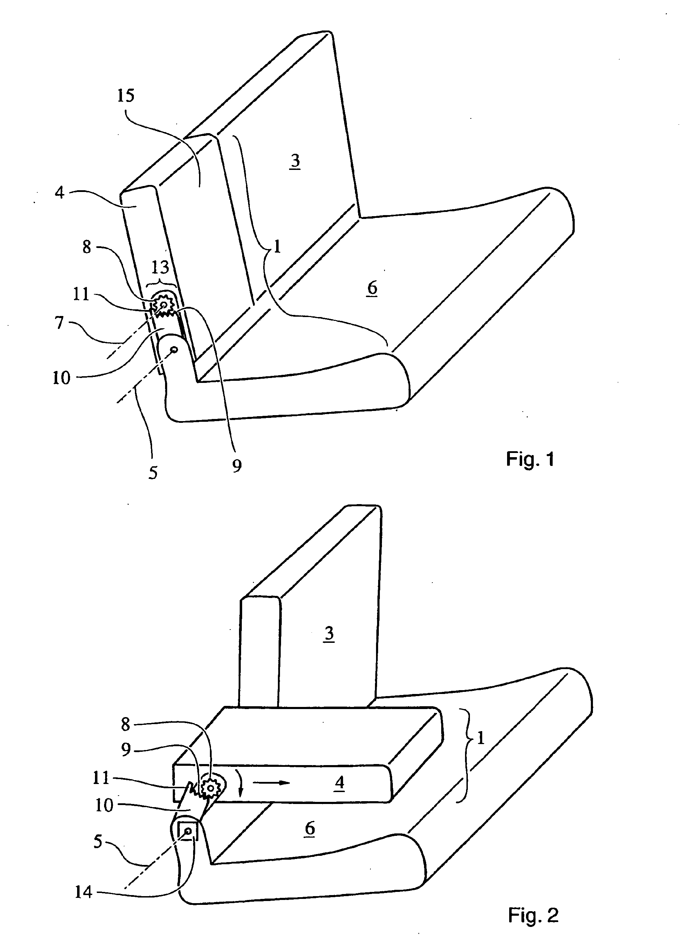

In der Figur 1 ist schematisch ein Fahrzeugsitz 1 dargestellt, mit einer Rückenlehne 4 und einem Sitzteil 6. Ein Schwenkmittel 13 ist sowohl mit der Rückenlehne 4 wie auch mit dem Sitzteil 6 verbunden und weist ein Zahnrad 8 und eine Lasche 10 mit einer Verzahnung 9 auf. Die Rückenlehne 4 ist um eine erste Drehachse 5 drehbar. Dabei befindet sich die erste Drehachse 5 in einem Mindestabstand von der Anlehnfläche 15 der Rückenlehne 4, um den Sitzkomfort des Fahrzeugsitzes 1 (beispielsweise hinsichtlich eines möglichen Durchdrückens der ersten Drehachse 5) zu erhöhen. Das Zahnrad 8 befindet sich in der Normalposition in einer hinteren Anschlagposition 11 der Lasche 10, bzw. an einem Anschlag 11. Auch dargestellt ist die zweite Drehachse 7, die virtuell ist und durch das Schwenkmittel 13 entsteht. Weiterhin ist in Figur 1 eine weitere Rückenlehne 3 dargestellt. In diesem Ausführungsbeispiel ist das Sitzteil 6 des Fahrzeugsitzes 1 auch gleichzeitig das Sitzteil 6 für die weitere Rückenlehne 3. Es ist jedoch auch denkbar, dass die Rückenlehne 4 und die weitere Rückenlehne 3 mit jeweils separaten Sitzteilen 6 ein Fahrzeugsitz 1 bilden.

Die Figur 2 zeigt schematisch den Fahrzeugsitz 1 in einer Armlehnenposition. Durch Drehen der Rückenlehne - teilweise um die erste Drehachse 5 und teilweise um die zweite Drehachse 7 - wandert das Zahnrad 8 in Richtung des Sitzteils 6 an der Verzahnung 9 entlang nach vorne und verlässt somit die hintere Anschlagsposition 11 der Lasche 10. Die Lasche 10 bleibt dabei in ihrer Position unverändert. Die Rückenlehne 4 hat in dem Beispiel keinen Kontakt zu dem Sitzteil 6. Im Bereich der ersten Drehachse 5 befindet sich ein Rastmittel 14, das eine ungewollte Drehung der Rückenlehne 4 verhindern soll. Auch dargestellt ist die weitere Rückenlehne 3, die bei der Armlehnenposition der Rückenlehne 4 aufrecht verbleibt.

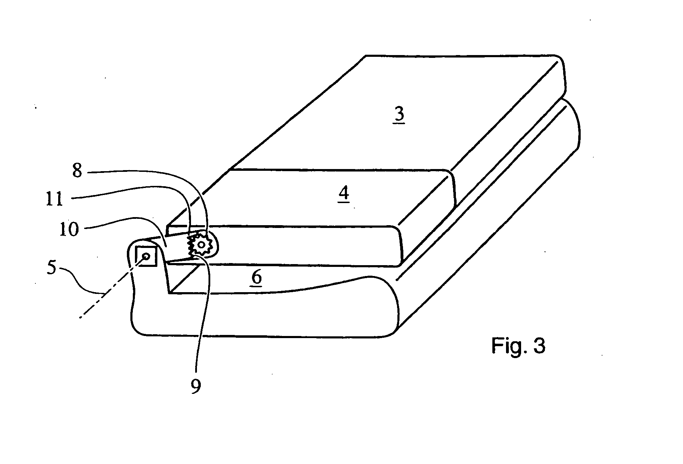

In der Figur 3 ist die Rückenlehne 4 in Ladeposition dargestellt. Dabei wird die Rückenlehne 4 zusammen mit der weiteren Rückenlehne 3 um die erste Drehachse 5 gedreht bis die Rückenlehne 4 und die weitere Rückenlehne 3 mit dem Sitzteil 6 in Kontakt stehen oder im wesentlichen waagrecht stehen. Dabei schwenkt die Lasche 10 um die erste Drehachse 5 in Richtung des Sitzteils 6 nach vorne. Das Zahnrad 8 verbleibt in der Verzahnung 9 dabei in der hinteren Anschlagposition 11 (bei einem Umklappen ausgehend von der Normalposition) bzw. das Zahnrad 8 wandert entlang der Verzahnung 9 zur hinteren Anschlagposition 11 (bei einem Umklappen ausgehend von der Armlehnenposition).

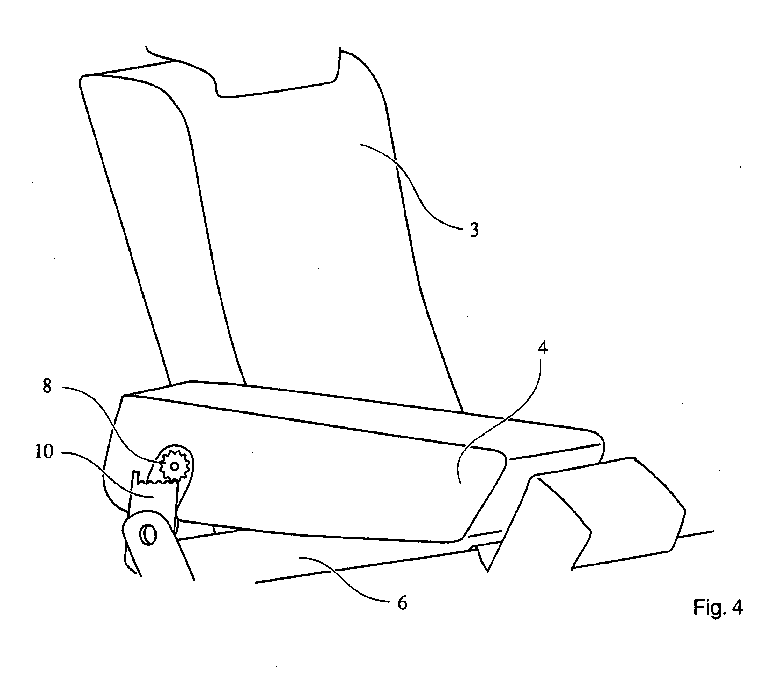

Die Figur 4 zeigt schematisch die Rückenlehne 4 in Armlehnenposition, wobei die weitere Rückenlehne 3 die Normalposition einnimmt. Auch hier ist das Zahnrad 8 in Richtung des Sitzteils 6 nach vorne gewandert und befindet sich in einem vorderen Bereich der Lasche 10. In diesem Ausführungsbeispiel befindet sich die Kopfstütze der Rückenlehne 4 in Kontakt zum Sitzteil 6.

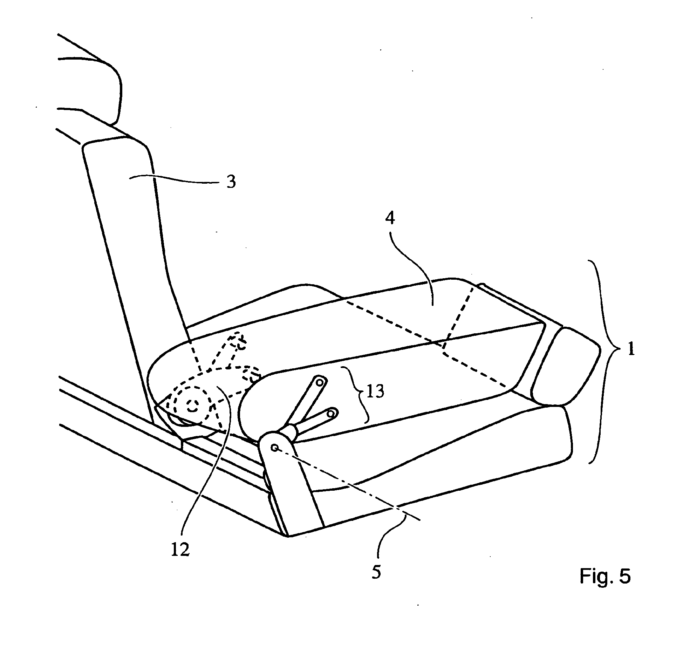

In der Figur 5 ist der Fahrzeugsitz 1 dargestellt, wobei als Schwenkmittel 13 in diesem Beispiel als ein Viergelenkmechanismus 12 vorgesehen ist. Die Rückenlehne 4 ist gedreht worden und befindet sich in Armlehnenposition. Die zweite Rückenlehne 3 ist dabei in einer Normalposition dargestellt. Nimmt die Rückenlehne 4 eine Ladeposition ein, so wird der Viergelenkmechanismus im wesentlichen vollständig gestreckt (nicht dargestellt).

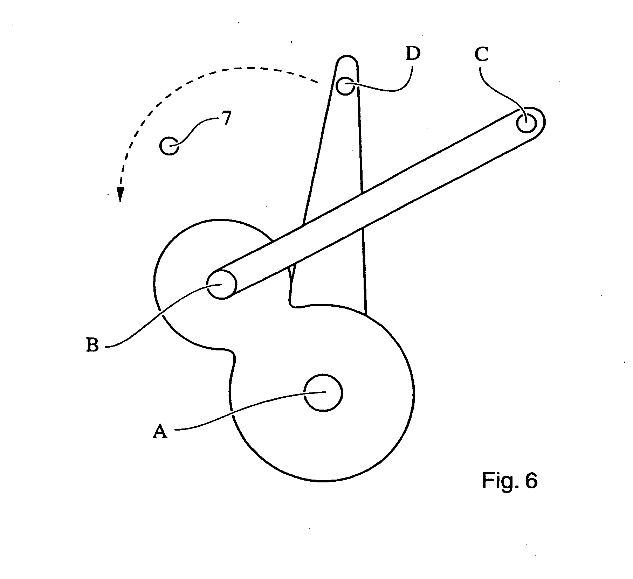

Die Figur 6 zeigt schematisch den Viergelenkmechanismus 12 mit seinen Gelenkpunkten A B C D. Ein erster Hebel entsteht dabei zwischen den Punkten A und B, ein zweiter Hebel zwischen den Punkten A und D, ein dritter Hebel zwischen den Punkten B und C und ein vierter Hebel zwischen den Punkten C und D. Die Punkte C und D sind fest jedoch drehbar mit der Rückenlehne 4 verbunden. Die Punkte A und B sind in der Normalposition und in der Armlehnenposition fest mit dem Sitzteil 6 verbunden. Bei einer Drehung der Rückenlehne von der Normalposition in die Armlehnenposition verfährt der Punkt D einer Halbkreisbahn um den Punkt A wie dargestellt und gleichzeitig der Punkt C auf einer Halbkreisbahn um den Punkt B. Hierdurch wird eine virtuelle zweite Drehachse 7 etwa an der in Figur 1 eingezeichneten Stelle erzeugt. Bei einem Umklappen der weiteren Rückenlehne 3 von der Normalposition in die Ladeposition wird der komplette Viergelenkmechanismus 12 um den Punkt A gedreht, der im wesentlichen mit der
ersten Drehachse 5 zusammenfällt. Hierbei bleibt der Viergelenkmechanismus im wesentlichen vollständig gestreckt.

### Bezugszeichenliste

- 1: Fahrzeugsitz
- 3: weitere Rückenlehne
- 4: Rückenlehne
- 5: erste Drehachse
- 6: Sitzteil
- 7: zweite Drehachse
- 8: Zahnrad
- 9: Verzahnung
- 10: Lasche
- 11: hintere Anschlagposition
- 12: Viergelenkmechanismus
- 13: Schwenkmittel
- 14: Rastmittel
- 15: Anlehnfläche
- A, B, C, D: Gelenkpunkte (Viergelenkmechanismus)

## Patentansprüche

1. Fahrzeugsitz (1) mit einem Sitzteil (6) und einer Rückenlehne (4), wobei die Rückenlehne (4) eine erste Drehachse (5) aufweist, wobei die Rückenlehne (4) durch die erste Drehachse (5) um wenigstens 90° um die erste Drehachse (5) von einer Normalposition in eine Ladeposition drehbar vorgesehen ist, wobei die Rückenlehne (4) ein Schwenkmittel (13) aufweist, wobei durch das Schwenkmittel (13) die Rückenlehne (4) um eine zweite Drehachse (7) in eine Armlehnenposition überführbar ist, wobei der überwiegende Teil der Rückenlehne (4) in der Armlehnenposition höher gelagert ist als in der Ladeposition, **dadurch gekennzeichnet, dass** die zweite Drehachse (7) eine von dem Schwenkmittel (13) bestimmte virtuelle Drehachse ist, wobei das Schwenkmittel (13) ein Zahnrad (8) und eine Lasche (10) aufweist, wobei die Lasche (10) eine Verzahnung (9) aufweist, wobei durch Drehen der Rückenlehne (4), teilweise um die erste Drehachse (5) und teilweise um die zweite Drehachse (7) zur Einstellung der Armlehnenposition, eine Bewegung des Zahnrades (8) an der Verzahnung (9) entlang vorgesehen ist.

2. Fahrzeugsitz (1) nach Anspruch 1, **dadurch gekennzeichnet, dass** der Fahrzeugsitz (1) eine weitere Rückenlehne (3) aufweist.

3. Fahrzeugsitz (1) nach Anspruch 2, **dadurch gekennzeichnet, dass** die Rückenlehne (4) und die weitere Rückenlehne (3) in der Ladeposition eine gemeinsame, bevorzugt im Wesentlichen waagerechte, Ebene bilden.

4. Fahrzeugsitz (1) nach einem der vorhergehenden Ansprüche, **dadurch gekennzeichnet, dass** das Schwenkmittel (13) mit dem Sitzteil (6) und der Rückenlehne (4) des Fahrzeugsitzes (1) verbunden ist.

5. Fahrzeugsitz (1) nach einem der vorhergehenden Ansprüche, **dadurch gekennzeichnet, dass** das Schwenkmittel (13) durch ein Rastmittel (14) gesperrt ist.

6. Fahrzeugsitz (1) nach einem der vorhergehenden Ansprüche, **dadurch gekennzeichnet, dass** zwischen der ersten Drehachse (5) und einer Anlehnfläche (15) der Rückenlehne (4) ein Mindestabstand vorgesehen ist.

7. Fahrzeugsitz (1) nach einem der Ansprüche 2 bis 7, **dadurch gekennzeichnet, dass** der Fahrzeugsitz (1) mit Rückenlehne (4) und weiterer Rückenlehne, (3) ein Teil, bevorzugt ein 60% Teil, einer Rückbank eines Fahrzeugs ist.

## Claims

1. Vehicle seat (1) with a seat part (6) and a backrest (4), the backrest (4) having a first axis of rotation (5), and the backrest (4) being rotatable by the first axis of rotation (5) through at least 90° about the first axis of rotation (5) from a normal position into a loading position, the backrest (4) having a pivoting means (13), the backrest (4) being transferable about a second axis of rotation (7) into an armrest position by the pivoting means (13), and the predominant part of the backrest (4) being mounted higher in the armrest position than in the loading position, **characterized in that** the second axis of rotation (7) is a virtual axis of rotation determined by the pivoting means (13), the pivoting means (13) having a gearwheel (8) and a tab (10), the tab (10) having a toothing (9), and movement of the gearwheel (8) along the toothing (9) being provided by rotation of the backrest (4), partly about the first axis of rotation (5) and partly about the second axis of rotation (7) in order to set the armrest position.

2. Vehicle seat (1) according to Claim 1, **characterized in that** the vehicle seat (1) has a further backrest (3).

3. Vehicle seaL (1) according Lo Claim 2, **characterized in that** the backrest (4) and the further backrest (3) form a common, preferably substantially horizontal, plane in the loading position.

4. Vehicle seat (1) according to one of the preceding claims, **characterized in that** the pivoting means (13) is connected to the seat part (6) and the backrest (4) of the vehicle seat (1).

5. Vehicle seat (1) according to one of the preceding claims, **characterized in that** the pivoting means (13) is blocked by a latching means (14).

6. Vehicle seat (1) according to one of the preceding claims, **characterized in that** a minimum distance is provided between the first axis of rotation (5) and a support surface (15) of the backrest (4).

7. Vehicle seat (1) according to one of Claims 2 to 6, **characterized in that** the vehicle seat (1) with the backrest (4) and further backrest (3) is part, preferably a 60% part, of a rear bench of a vehicle.

## Revendications

1. Siège de véhicule (1) équipé d'une partie d'assise (6) et d'un dossier (4), le dossier (4) présentant un premier axe de rotation (5), le dossier (4) pouvant être pivoté, par le biais du premier axe de rotation (5), d'au moins 90° autour du premier axe de rotation (5), d'une position normale dans une position de chargement, le dossier (4) comportant un moyen de basculement (13), ledit moyen de basculement (13) permettant de décaler le dossier (4) autour d'un deuxième axe de rotation (7) dans une position d'accoudoirs, la partie principale du dossier (4) étant disposée plus haut dans la position d'accoudoirs que dans la position de chargement, **caractérisé en ce que** le deuxième axe de rotation (7) est un axe de rotation virtuel défini par le moyen de basculement (13), le moyen de basculement (13) comportant une roue dentée (8) et une languette (10), la languette (10) comprenant un endentement (9), un mouvement de la roue dentée (8) étant prévu le long de l'endentement (9) par pivotement du dossier (4), en partie autour du premier axe de rotation (5) et en partie autour du deuxième axe de rotation (7) pour réaliser le réglage de la position d'accoudoirs.

2. Siège de véhicule (1) selon la revendication 1, **caractérisé en ce que** le siège de véhicule (1) comporte un dossier (3) supplémentaire.

3. Siège do véhicule (1) selon la revendication 2, **caractérisé en ce que** le dossier (4) et le dossier (3) supplémentaire forment, dans la position de chargement, un plan commun, de façon préférée pour l'essentiel horizontal.

4. Siège de véhicule (1) selon l'une quelconque des revendications précédentes, **caractérisé en ce que** le moyen de basculement (13) est relié à la partie d'assise (6) et au dossier (4) du siège de véhicule (1).

5. Siège de véhicule (1) selon l'une quelconque des revendications précédentes, **caractérisé en ce que** le moyen de basculement (13) est bloqué par un moyen d'arrêt (14).

6. Siège de véhicule (1) selon l'une quelconque des revendications précédentes, **caractérisé en ce qu'**un écartement minimal est prévu entre le premier axe de rotation (5) et une surface d'appui (15) du dossier (4).

7. Siège de véhicule (1) selon l'une quelconque des revendications 2 à 6, **caractérisé en ce que** le siège de véhicule (1) est une partie dotée d'un dossier (4) et d'un dossier (3) supplémentaire, de façon préférée une partie de 60 % d'une banquette de véhicule.
